(19) **Europäisches Patentamt / European Patent Office / Office européen des brevets**

(11) **EP 2 931 806 B2**

(12) # NEW EUROPEAN PATENT SPECIFICATION
After opposition procedure

(45) Date of publication and mention of the opposition decision:
**25.11.2020  Bulletin 2020/48**

(45) Mention of the grant of the patent:
**23.11.2016  Bulletin 2016/47**

(21) Application number: **13805929.0**

(22) Date of filing: **17.12.2013**

(51) Int Cl.:
*C08L 23/06* (2006.01)  *F16L 9/12* (2006.01)
*F16L 1/00* (2006.01)  *C08K 3/02* (2006.01)

(86) International application number:
**PCT/EP2013/076962**

(87) International publication number:
**WO 2014/095911 (26.06.2014 Gazette 2014/26)**

(54) **PROCESS FOR THE PREPARATION OF A HIGH DENSITY POLYETHYLENE BLEND**

VERFAHREN ZUR BEREITUNG EINES POLYETHYLEN HOHER DICHTE BLEND

PROCEDE DE PREPARATION D'UNE HAUTE DENSITÉ POLYÉTHYLÈNE BLEND

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2012  EP 12197600**

(43) Date of publication of application:
**21.10.2015  Bulletin 2015/43**

(73) Proprietor: **Borealis AG**
**1220 Vienna (AT)**

(72) Inventor: **LIU, Yi**
**A-4209 Engerwitzdorf (AT)**

(74) Representative: **Dehns**
**St. Bride's House**
**10 Salisbury Square**
**London EC4Y 8JD (GB)**

(56) References cited:
EP-A1- 1 772 485    EP-A1- 1 772 486
EP-A1- 2 011 822    EP-A1- 2 354 184
WO-A2-2007/022908    US-A- 4 336 352
US-A- 4 835 219    US-A- 5 422 400

- SONG S ET AL: "Effect of small amount of ultra high molecular weight component on the crystallization behaviors of bimodal high density polyethylene", POLYMER, ELSEVIER SCIENCE PUBLISHERS B.V, GB, vol. 49, no. 12, 10 June 2008 (2008-06-10) , pages 2964-2973, XP022703137, ISSN: 0032-3861, DOI: 10.1016/J.POLYMER.2008.04.050 [retrieved on 2008-05-02]
- R. P. Kusy, J. Q. Whitley: "Molecular weight distribution of a bulk ultra-high molecular weight polyethylene product?impax 5M+ UHMW-NAT", JOURNAL OF BIOMEDICAL MATERIALS RESEARCH, WILEY, NEW YORK, NY, US, vol. 20, no. 9, 1 November 1986 (1986-11-01), pages 1373-1389, US ISSN: 0021-9304, DOI: 10.1002/jbm.820200911

EP 2 931 806 B2

## Description

This invention concerns a multimodal polyethylene composition. In particular, the invention relates to a polyethylene composition comprising a high density multimodal polyethylene copolymer component and an ultrahigh molecular weight polyethylene homopolymer component. The invention also covers articles, preferably pipes, made from the multimodal polyethylene composition.

Multimodal polyethylene polymers are well known in the art. A multimodal polyethylene system typically comprises a high molecular weight (HMW) and a low molecular weight (LMW) component. The HMW component confers good mechanical properties to the system, whilst the LMW component provides good processability. Multimodal polyethylene systems have a wide range of useful practical applications, such as in the production of blow moulded articles, films or pipes. Improved mechanical properties can be achieved by increasing the molecular weight of the HMW component. This, however, is usually at the cost of a loss in homogeneity resulting from an increase in the viscosity ratio between the HMW and LMW components, which can in turn actually be detrimental to the mechanical properties attained.

Further improved mechanical properties are possible by including an ultra high molecular weight (UHMW) fraction into a multimodal polyethylene system. There are serious compatibility problems however when such a high Mw species is added. For example, Ogunniyi et al (Journal of Applied Polymer Science, 2005, 97, 413-425) and Vadhar et al (Journal of Applied Polymer Science, 1986, 32, 5575-5584) both report the need for long blending times of the order of 15 minutes in a batch mixer when UHMW polyethylene was added to other polyethylenes.

The incorporation of UHMW polyethylene into a polyethylene composition as a copolymer is also known and is reported in, for example, WO 2007/042216, WO 96/18677 and WO 2006/092378.

The inclusion of UHMW polyethylene into HDPE *via* extrusion has also been investigated and has been carried out using a co-rotating twin screw extruder by Huang and Brown (Polymer, 1992, 33, 2989-2997). However, although the UHMW polyethylene particles were found to be well bonded in the matrix and this helped to slow down the rate of crack propagation, when analysed under SEM, the UHMW polyethylene was found to remain in large separate domains with no evidence of "melting" into the HDPE matrix. For these reasons, the amount of UHMW polyethylene is limited to low loadings.

In WO94/28064, polyethylene compositions are reported comprising a UHMW component and a unimodal HDPE component.

In order to maximise the advantage gained by including an UHMW polyethylene in a bimodal polyethylene blend, there remains a need for the generation of polymers with increased weight contents of this useful component.

It is an object of the present invention to provide a novel multimodal polyethylene blend which has desirable mechanical properties and processability. Specifically, it is desired to produce a blend of an UHMW polyethylene into a multimodal polyethylene matrix at commercially relevant loadings, allowing advantage to be taken of the resulting enhanced mechanical properties. Improvements in impact strength, without an associated loss in tensile properties of the resultant polymer are desired.

The present inventors have found that the combination of a particular high density multimodal polyethylene copolymer with a particular homopolymer ultra high molecular weight component can result in a blend which provides the necessary properties. These components can surprisingly be blended together to give homogeneous blends which possess excellent impact strength without losses of tensile modulus.

## Summary of Invention

Thus viewed from a first aspect the invention provides a high density polyethylene blend, comprising

(A) 55 to 95 wt% of a high density multimodal polyethylene copolymer component having a density of at least 940 $kg/m^3$, and
(B) 5 to 45 wt% of an ultra-high molecular weight polyethylene homopolymer having a nominal viscosity molecular weight Mv of 2,100 kg/mol to 4,000,000 g/mol (UHMW polyethylene);
and wherein said blend has an $MFR_{21}$ of 10.0 g/10min or less and a density of at least 940 $kg/m^3$.

The homogeneous polymer blends of the current invention are well suited for use in pipes for various purposes, such as fluid transport, e.g. transport of liquids or gases such as water or natural gas is known. It is common for the fluid to be pressurised in these pipes.

Thus viewed from a further aspect, the invention provides an article, preferably a pipe, comprising the polymer blend as hereinbefore described.

Viewed from another aspect the invention provides a process for the preparation of a blend as hereinbefore defined comprising mixing

(A) 55 to 95 wt% of a high density multimodal polyethylene copolymer component having a density of at least 940 kg/m$^3$, and

(B) 5 to 45 wt% of an ultra-high molecular weight polyethylene homopolymer having a nominal viscosity molecular weight Mv of 2,100 kg/mol to 4,000,000 g/mol (UHMW polyethylene);

and extruding, at least twice, the same so as to form a blend having an MFR$_{21}$ of 10.0 g/10min or less and a density of at least 940 kg/m$^3$. Preferably, the blend is extruded 2 or 3 times.

Viewed from another aspect the invention provides the use of the blend as hereinbefore defined in the manufacture of an article, especially a pipe.

## Detailed Description of Invention

The tests for any claimed parameter are given in the "analytical tests" section of the text which precedes the examples.

Wherever the term "molecular weight Mw" is used herein, the weight average molecular weight is meant. Wherever the term "molecular weight Mv" is used herein, the nominal viscosity molecular weight is meant.

The polyethylene blend of the invention comprises at least two components: a high density multimodal polyethylene component, and an ultra-high molecular weight polyethylene homopolymer component. Taken together these form the polyethylene blend of the invention. In all embodiments, the blend is an HDPE, i.e. one having a density of at least 940 kg/m$^3$.

## Blend Properties

The properties of the blend are reported below. The parameters which follow may be measured in the presence of standard additives that are inherently present in commercial polymers which may be used to manufacture the blends of the invention.

The polyethylene blend of the invention has a density according to ISO 1183 at 23°C of at least 940 kg/m$^3$, preferably at least 945 kg/m$^3$, more preferably at least 950 kg/m$^3$, especially at least 952 kg/m$^3$. The upper limit for density may by 980 kg/m$^3$, preferably 975 kg/m$^3$, especially 970 kg/m$^3$. A highly preferred density range is 950 to 965 kg/m$^3$, especially 952 to 961 kg/m$^3$.

The MFR$_{21}$ according to ISO 1133 of the polyethylene blend of the invention is preferably in the range of 0.05 to 10 g/10 min, preferably 0.1 to 8 g/10min, especially 0.2 to 5 g/10min.

The polyethylene blend preferably has an MFR$_5$ of less than 1.0 g/10min, preferably less than 0.5 g/10min, even more preferably less than 0.2 g/10min.

The polydispersity index (PI) of the polyethylene blends of the invention is preferably in the range 0.5 to 5 Pa$^{-1}$, more preferably 0.8 to 4 Pa$^{-1}$. Highly preferably the PI is in the range 1 to 4 Pa$^{-1}$.

The notched impact strength of the polyethylene blends of the invention is preferably greater than 34 kJ/m$^2$ when measured at 0 °C, more preferably greater than 38 kJ/m$^2$.

The tensile modulus of the blends of the invention is preferably higher than 85% of the value of component (A) on its own, especially higher than 90%. The tensile modulus of the blends of the invention may therefore be at least 950 MPa, such as at least 1000 MPa, preferably at least 1050 MPa.

The blends also show very low white spot values indicating low levels of gels and hence good homogeneity. White spots can be determined using microscopy. It is preferred if the blends of the invention have minimal white spots.

## High Density Multimodal Polyethylene Component

The blend of the invention includes a high density multimodal polyethylene copolymer component, i.e. one having a density of at least 940 kg/m$^3$. The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

Component (A) of the blend of the invention is a high density multimodal polyethylene copolymer and is present in an amount of 55 to 95 wt%, such as 80 to 93 wt%, preferably 85 to 92 wt% of the blend.

The multimodal polyethylene component (A) of the invention has a density according to ISO 1183 at 23°C of at least 940 kg/m$^3$, preferably at least 945 kg/m$^3$. The upper limit for density may by 980 kg/m$^3$, preferably 975 kg/m$^3$, especially 970 kg/m$^3$. A highly preferred density range is 945 to 965 kg/m$^3$.

The MFR$_{21}$ according to ISO 1133 of the multimodal polyethylene of the invention is preferably in the range of 1 to 20 g/10min, preferably 2 to 15 g/10 min. Preferably the multimodal polyethylene component (A) has an MFR$_{21}$ of 3 to 12 g/10min.

The MFR$_5$ according to ISO 1133 of the multimodal polyethylene component (A) of the invention is preferably less than 1.0 g/10min.

Component (A) preferably has a M$_w$ of at least 70,000 g/mol, more preferably at least 120,000 g/mol. The Mw of the Component (A) should be less than 400,000 g/mol, preferably less than 300,000 g/mol.

The Mw/Mn of component (A) may be at least 4, such as at least 10, such as 10 to 30.

In all embodiments of the invention, it is preferable if component (A) is a multimodal polyethylene comprising at least (i) a lower weight average molecular weight (LMW) ethylene homopolymer or copolymer component, and (ii) a higher weight average molecular weight (HMW) ethylene homopolymer or copolymer component. At least one of said LMW and HMW components is a copolymer of ethylene with at least one comonomer. It is preferred that at least said HMW component is an ethylene copolymer. Alternatively, if one of said components is a homopolymer, then said LMW is the preferably the homopolymer.

Said LMW component of multimodal polymer preferably has a MFR$_2$ of at least 5 g/10 min, preferably at least 50 g/10 min, more preferably at least 100 g/10min.

The density of LMW component of said multimodal polymer may range from 950 to 980 kg/m$^3$, e.g. 950 to 970 kg/m$^3$.

The LMW component of said multimodal polymer may form from 30 to 70 wt%, e.g. 40 to 60% by weight of the multimodal polymer with the HMW component forming 70 to 30 wt%, e.g. 60 to 40% by weight. In one embodiment said LMW component forms 50 wt% or more of the multimodal polymer as defined above or below. Typically, the LMW component forms 45 to 55% and the HMW component forms 55 to 45% of the blend.

The HMW component of said multimodal ethylene polymer has a lower MFR$_2$ than the LMW component.

The high density multimodal ethylene component of the invention is a copolymer. By ethylene homopolymer is meant a polymer which is formed essentially only ethylene monomer units, i.e. is 99.9 wt% ethylene or more. It will be appreciated that minor traces of other monomers may be present due to industrial ethylene containing trace amounts of other monomers.

The high density multimodal ethylene component of the invention is a copolymer formed from ethylene with at least one other comonomer, e.g. C$_{3-20}$ olefin. Preferred comonomers are alpha-olefins, especially with 3-8 carbon atoms. Preferably, the comonomer is selected from the group consisting of propene, 1-butene, 1-hexene, 4-methyl-1-pentene, 1-octene, 1,7-octadiene and 7-methyl- 1,6-octadiene. The use of 1-hexene or 1-butene is most preferred.

The high density multimodal ethylene component of the invention can comprise one monomer or two monomers or more than 2 monomers. The use of a single comonomer is preferred. If two comonomers are used it is preferred if one is an C$_{3-8}$ alpha-olefin and the other is a diene as hereinbefore defined.

The amount of comonomer is preferably such that it comprises up to 3.0 mol%, more preferably 0.1-2.0 mol% and most preferably 0.1-1.5 mol% of the ethylene polymer. Values under 1.0 mol% are also envisaged, e.g. 0.1 to 1.0 mol%. These can be determined by NMR.

It is preferred however if the ethylene polymer of the invention comprises a LMW homopolymer component and a HMW ethylene copolymer component, e.g. an ethylene hexene copolymer or an ethylene butene copolymer.

For the preparation of the multimodal ethylene polymer of the present invention polymerisation methods well known to the skilled person may be used. It is within the scope of the invention for a multimodal, e.g. at least bimodal, polymers to be produced by blending each of the components in-situ during the polymerisation process thereof (so called in-situ process) or, alternatively, by blending mechanically two or more separately produced components in a manner known in the art.

Polyethylenes useful in the present invention is preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the polyethylene polymer used in the blend of the invention are produced in at least two-stage polymerization using a single site catalyst or Ziegler Natta catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

The multimodal polyethylenes of the invention are commercial products and can be purchased from various suppliers.

## UHMW Component

The blend of the invention further comprises component (B) an UHMW polyethylene homopolymer component in an amount of 5 to 45 wt%. Preferably, this UHMWPE comprises 7 to 20 wt%, such as 8 to 15 wt% of the blend. It will be appreciated that the UHMW component is different to the (A) component of the blend.

The UHMW polyethylene component of the blends of the invention has a nominal viscosity molecular weight (Mv) of 2,100 kg/mol to 4,000,000 g/mol, more preferably 2,500 to 3500 kg/mol, such as 2750 to 3250 kg/mol. It has been found that when using a polyethylene having such an Mv that the impact strength of the blend can be very high. Moreover, this high impact strength can be achieved without any significant reduction in tensile modulus. It is often the case that improvements in impact strength lead to a reduction in stiffness due to a reduction in crystallinity. This is not observed in the present invention.

The UHMW polyethylene of the invention is an ethylene homopolymer. The UHMW component is also preferably unimodal. This means that it has a single peak on GPC. Ideally it is formed from a single component and is therefore produced in a single manufacturing step.

The UHMW polyethylene of the invention can be prepared by conventional processes. Preferably, the UHMW polyethylene is prepared using a Ziegler-Natta catalyst. These UHMW polymers are commercially available polymers.

The density of the UHMW component can be in the range 920 to 960 kg/m$^3$, preferably 925 to 945 kg/m$^3$.

This component typically has a very low MFR, such as an $MFR_{21}$ of less than 0.5 g/10min, especially $MFR_{21}$ of less than 0.1 g/10min, more especially less than 0.05 g/10min.

The intrinsic viscosity of the UHMW component is preferably at least 10 dl/g, preferably at least 12 dl/g, such as at least 14 dl/g. The intrinsic viscosity of the UHMW component should preferably not exceed 20 dl/g.

## Preparation of Blend

The blends of the invention may be prepared simply by mixing the components but to ensure homogeneity and hence low white spots, it will be appreciated that the components have to be compounded. This can be achieved by any conventional method known to those skilled in the art, e.g. extrusion or kneading, preferably extrusion.

Where extrusion is used to prepare the blends of the invention, a second extrusion step is employed, e.g. under the same conditions as the first. It has been found that the use of two or more extrusion steps can improve homogeneity. In the context of blends comprising the UHMW polyethylene of the invention, the use of 3 extrusion steps or more are possible. There is however a trade off here. Too many extrusion steps and the polymer can degrade. The use of 2 or preferably 3 extrusions is ideal.

The present inventors have surprisingly found that if the Mv of the polymer is greater than 4000 kg/mol, in order to ensure homogeneity in a blend with the multimodal HDPE component, numerous extrusion steps are required. These extrusion steps result however in a degradation in the blend and a loss of properties.

The inventors have also found however that if a blend can be made homogeneous, improvements in impact strength without significant reduction in stiffness can be achieved at higher values of Mv. The range of 2100 kg/mol to 4,000,000 g/mol as claimed herein is therefore the best range to ensure good mechanical properties but without the issues of degradation that can occur during multiple extrusions of exceptional high Mv polymers.

The use of extrusion to homogenise the compositions is preferred, in particular the use of a co-rotating twin extruder, such as ZSK 18 or ZSK 40. Extrusion conditions will be familiar to the skilled person. Appropriate temperatures include 220 to 240°C, such as 225 to 235°C. Screw speeds of 100 to 200 rpm, such as 100 to 150 rpm are appropriate. In general, slower throughput rates encourage homogeneity. Each extrusion step is preferably carried out under the same conditions.

It will be appreciated that prior to forming the blend of the invention, the two polymer components of the invention may be blended with standard additives and adjuvants known in the art. It may also contain additional polymers, such as carrier polymers of the additive masterbatches. The properties of the components of the blend and the blend itself can be measured in the absence of or in the presence of any additives. It will be preferred if any additives are present however when properties are determined.

Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups.

Examples of sterically hindered phenols are, among others, 2,6-di-tert-butyl - 4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010) octadecyl-3-3(3'5'-di-tert-butyl-4'-hydroxyphenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-*t*-butylphenyl) phosphite (sold, e.g., by Ciba Specialty Chemicals under the trade name of Irgafos 168), tetrakis-(2,4-di-*t*-butylphenyl)-4,4'-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4).

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'-dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), *p*-(*p*-toluene-sulfonylamido)-diphenylamine (sold, e.g., by Chemtura under the trade name of Naugard SA) and *N,N*-diphenyl-*p*-phenylene-diamine (sold, e.g., by Chemtura under the trade name of Naugard J).

Commercially available blends of antioxidants and process stabilizers are also available, such as Irganox B225, Irganox B215 and Irganox B561 marketed by Ciba-Specialty Chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch where it is premixed with a polymer, preferably high density polyethylene (HDPE), in a specific amount. Suitable masterbatches are, among others, HD4394, sold by Cabot Corporation, and PPM1805 by Poly Plast Muller. Also titanium oxide may be used as an UV-screener.

It is particualr preferred therefore that carbon black is present in the blends of the invention.

Components (A) and (B) in the polymer blend of the invention can be further blended with any other polymer of interest or used on its own as the only olefinic material in an article. Thus, the ethylene polymer of the invention can be blended with known HDPE, MDPE, LDPE, LLDPE polymers. Ideally however any article made from the ethylene polymer blend is the invention consists essentially of the polymer blend, i.e. contains the multimodal polyethylene component and the UHMWPE component.

**Applications**

The blends of the invention can be used to make all manner of articles such as cable sheathings, fibres, films and moulded articles. They are of primary interest in the formation of pipes. Pipes can be manufactured using various techniques such as RAM extrusion or screw extrusion. The actual pipe extrusion process does not count as an extrusion step for extruding the blend.

Articles such as pipes preferably consist of the high density polyethylene blend. Preferably, the article consists of the high density polyethylene blend and the high density polyethylene blend itself consists of component (A) and (B) and additives only.

It will be appreciated that the preferred features of the polymers of the invention as described herein can all be combined with each other in any way.

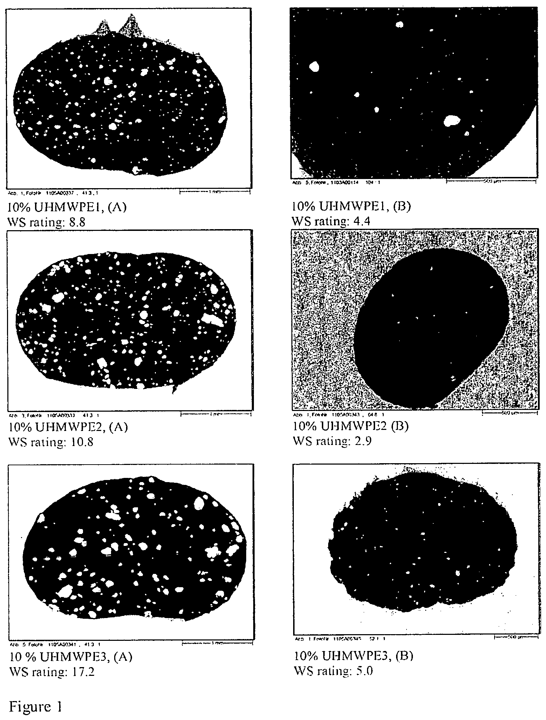

The invention will now be described with reference to the following non limiting examples and figure. Figure 1 is a microscopic section of the pellets of the examples showing white spots.

Analytical tests

Melt Flow Rate

The melt flow rate (MFR) is determined according to ISO 1133 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

## Density

Density of the polymer was measured according to ISO 1183-1:2004 Method A on compression moulded specimen prepared according to EN ISO 1872-2 (February 2007) and is given in $kg/m^3$.

## Molecular weight

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the weight average molecular weight of the blend,
$w_i$ is the weight fraction of component "i" in the blend and
$Mn_i$ is the weight average molecular weight of the component "i".

**Nominal viscosity molecular weight (Mv)** is calculated from the intrinsic viscosity [$\eta$] according to ASTM D 4020 - 05

$$Mv = 5.37 \times 10^4 \times [\eta]^{1.37}$$

**Pheology**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta"$ and the loss tangent, tan $\delta$ which can be expressed as follows:

$$G' = \frac{\sigma_0}{\gamma_0} \cos\delta \ [\text{Pa}]$$

$$(3)$$

$$G' = \frac{\sigma_0}{\gamma_0} \sin\delta \ [\text{Pa}]$$

$$(4)$$

$$G^* = G' + iG'' \ [\text{Pa}]$$

$$(5)$$

$$\eta^* = \eta' - i\eta'' \ [\text{Pa.s}]$$

$$(6)$$

$$\eta' = \frac{G''}{\omega} \ [\text{Pa.s}]$$

$$(7)$$

$$\eta'' = \frac{G'}{\omega} \ [Pa.s]$$

$$(8)$$

The values of storage modulus (G'), loss modulus (G"), complex modulus (G*) and complex viscosity ($\eta$*) were obtained as a function of frequency ($\omega$). Thereby, e.g. $\eta*_{0.05\ rad/s}$ (eta*$_{0.05\ rad/s}$) is used as abbreviation for the complex viscosity at the frequency of 0.05 rad/s or $\eta*_{300\ rad/s}$ (eta*$_{300\ rad/s}$) is used as abbreviation for the complex viscosity at the frequency of 300 rad/s.

Besides the above mentioned rheological functions one can also determine other rheological parameters such as the so-called elasticity index EI(x). The elasticity index Ei(v) is the value of the storage modulus, G' determined for a value of the loss modulus, G" of x kPa and can be described by equation 10.

$$EI(x) = G' \ for \ (G'' = x \ kPa) \ [Pa] \qquad\qquad (9)$$

For example, the EI (5kPa) is the defined by the value of the storage modulus G', determined for a value of G" equal to 5 kPa.

The determination of so-called Shear Thinning Indexes is done, as described in equation 10.

$$SHI(x/y) = \frac{Eta^* \ for \ (G^*=x \ kPa)}{Eta^* \ for \ (G^*=y \ kPa)} \ \ [Pa] \qquad\qquad (10)$$

For example, the SHI$_{(2.7/210)}$ is defined by the value of the complex viscosity, in Pa·s, determined for a value of G* equal to 2.7 kPa, divided by the value of the complex viscosity, in Pa·s, determined for a value of G* equal to 210 kPa.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- *Interpolate y-values to x-values from parameter*" and the "*logarithmic interpolation type*" were applied.

The polydispersity index, PI, is defined by equation 11.

$$PI = \frac{10^5}{G'(\omega_{COP})}, \ \ \omega_{COP} = \omega \ for \ (G' = G'') \qquad\qquad (11)$$

where, $\omega_{COP}$ is the cross-over angular frequency, determined as the angular frequency for which the storage modulus, G' equals the loss modulus, G".

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

**Intrinsic viscosity**

The reduced viscosity (also known as viscosity number), $\eta_{red}$, and intrinsic viscosity, [$\eta$], of polyethylenes and polypropylenes are determined according to the ISO 1628-3: "Determination of the viscosity of polymers in dilute solution using capillary viscometers".

Relative viscosities of a diluted polymer solution (~1mg/ml) and of a pure solvent (decahydronaphthalene) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. The sample is weighed out and directly placed into the capillary. The capillary is filled with the exact volume of solvent by use of an automatic pipette. The sample is dissolved with constant stirring until complete dissolution is achieved (typically within 60-90min).

The efflux time of the polymer solution as well as of the pure solvent are measured several times until three consecutive readings do not differ for more than 0.1s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}} \qquad [dimensionless]$$

Reduced viscosity ($\eta_{red}$) is calculated using the equation:

$$\eta_{red} = \frac{t_{solution} - t_{solvent}}{t_{solvent} * C} \qquad [dl/g]$$

where C is the polymer solution concentration at 135°C: $C = \frac{m}{V\gamma}$ and $m$ is the polymer mass, $V$ is the solvent volume, and $\gamma$ is the ratio of solvent densities at 20°C and 135°C ($\gamma = \rho_{20}/\rho_{135} = 1.107$).

The calculation of intrinsic viscosity [$\eta$] is performed by using the Schulz-Blaschke equation from the single concentration measurement:

$$[\eta] = \frac{\eta_{red}}{1 + K \times C \times \eta_{red}}$$

where K is a coefficient depending on the polymer structure and concentration. For calculation of the approximate value for [$\eta$], K=0.27.

**Melting temperature $T_m$, crystallization temperature** $T_c$, is measured with Mettler TA820 differential scanning calorimetry (DSC) on 5-10 mg samples according to ISO 11357-3. Both crystallization and melting curves were obtained during 10 °C/min cooling and heating scans between 30 °C and 200 °C. Melting and crystallization temperatures were taken as the peaks of endotherms and exotherms.

**Quantification of comonomer content by FTIR spectroscopy**

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 $\mu$m and spectra recorded in transmission mode.

Specifically, the ethylene content of a polypropylene-co-ethylene copolymer is determined using the baseline corrected peak area of the quantitative bands found at 720-722 and 730-733 cm[-1]. Specifically, the butene or hexene content of a polyethylene copolymer is determined using the baseline corrected peak area of the quantitative bands found at 1377-1379 cm[-1]. Quantitative results are obtained based upon reference to the film thickness.

**nIS**

Charpy impact strength was determined according to ISO 179:2000 on V-notched samples of 80x10x4 mm[3] at 0 °C (nIS, 0°C). Samples were cut from plaques of 4 mm thickness prepared by compression molding according to ISO 293:2004 using the conditions defined in chapter 3.3 of ISO 1872-2:2007.

**Tensile Properties:**

**Tensile modulus**

As a measure for stiffness, the tensile modulus (E-modulus) of the compositions was measured at 23°C on compression moulded specimens according to ISO 527-2:1993. For samples prepared with the co-rotating twin screw extruder, the specimens were cut from plaques of 4 mm thickness prepared by compression molding according to ISO 1872-2: (type: 1B44mm), while those prepared with the kneader, the specimens were cut from plagues of 2 mm thickness (type: S2/5A 2mm). The modulus was measured at a speed of 1 mm/min.

### Stress at Yield:

Stress at yield (in MPa) was determined on the same samples according to ISO 527-2. The measurement was conducted at 23 °C temperature with an elongation rate of 50 mm/min.

### White spots

A pellet section was viewed under a microscope. The number of white spots was observed.

### Examples

UHMW PE1 homopolymer was purchased from Jingchem Corporation. It has a narrow, quite well defined Mv of 1,150,000 g/mol by ASTM 4020-81 (denoted in material info from the supplier). This is a comparative polymer.

UHMW PE2 homopolymer was purchased from Jingchem Corporation. It has a narrow, quite well defined Mv of 2.900,000 g/mol by ASTM 4020-81 (denoted in material info from the supplier).

UHMW PE3 homopolymer was purchased from Jingchem Corporation. It has a narrow, quite well defined Mv of 4.310,000 g/mol by ASTM 4020-81 (denoted in material info from the supplier). This is a comparative polymer.

Borsafe HE3490-LS-H is a commercial bimodal HDPE available from Borealis AG.

**Table 1: properties of HE3490-LS-H**

|  | Tm | Tc | $MFR_{21}$ | density |
|---|---|---|---|---|
| HE3490-LS-H | 130 °C | 117 °C | 9 | 959 kg/m$^3$ |

**Table 2: Properties of UHMWPE samples 1 to 3**

|  | Mv | Density | Tm |
|---|---|---|---|
|  | kg/mol | kg/m$^3$ | °C |
| UHMW-PE1 | 1.150 | 934 | 131.0 |
| UHMW-PE2 | 2.900 | 933 | 134.6 |
| UHMW-PE3 | 4.310 | 933 | 133.5 |

### Example 1

All polymer blends and the reference sample of HE3490-LS-H were prepared with a co-rotating TSE ZSK 18 extruder. In order to identify the benefits of homogeneity, blends were prepared with different processing conditions. All the "A" blends were extruded in sub-optimal conditions (at 230°C, 170 rpm and a high throughput rate of 3 kg/h) by single-pass compounding; while the "B" blends were prepared in optimal conditions (at 230~235°C, 120 rpm and a low throughput rate of 0.5~1.5 kg/h) by multi-pass compounding. The "B" UHMWPE1 blend was prepared by 2-pass compounding, "B" UHMWPE2 blend was prepared by 3-pass compounding and "B" UHMWPE3 blend was prepared by 5-pass compounding.

**Table 3. Summary of Blend Properties**

| Description | WS rating | Tensile modulus | Tensile stress at yield | Impact strength (0°C) |
|---|---|---|---|---|
|  |  | MPa | MPa | KJ/m$^2$ |
| HE3490-LS-H recipe |  | 1162 | 26.7 | 21.9 |
| 10% UHMWPE1 (A) | 8.8 | 1188 | 26.8 | 29.7 |

(continued)

| Description | WS rating | Tensile modulus | Tensile stress at yield | Impact strength (0°C) |
|---|---|---|---|---|
| | | MPa | MPa | KJ/m$^2$ |
| 10% UHMWPE1 (B) | 4.4 | 1102 | 25.9 | 33.2 |
| 10% UHMWPE2 (A) | 10.8 | 1170 | 26.5 | 35.5 |
| 10% UHMWPE2 (B) | 2.9 | 1107 | 25,7 | 43.3 |
| 10% UHMWPE3 (A) | 17.2 | 1173 | 26.5 | 32.4 |
| 10% UHMWPE3 (B) | 5.0 | 1165 | 26,9 | 27.9 |

Table 3 summarizes the tensile and impact strength properties of all polymer blends. For the less homogeneous (A) blends, the tensile modulus and yield stress remain nearly identical to the reference HE3490-LS-H, yet impact strength was improved to different degrees. The examples comprising 10 % UHMWPE1 or 10 % UHMWPE 3 are not according to the invention.

UHMWPE2, with a higher Mv than UHMWPE1, improved the impact strength 20% more than UHMWPE1 while UHMWPE3, with an even higher Mv, did not improve the impact strength further and, on the contrary, reduced it by 10% in comparison to UHMWPE2.

Comparing the more homogeneous (B) and less homogenous (A) series gives more information: homogeneous UHMWPE1 and UHMWPE2 blends show 12% and 22% higher impact strength than their less homogeneous counterparts respectively, with only marginal loss in the tensile properties. If mixed homogeneously with the matrix HE3490-LS-H, 10% UHMWPE2 can boost the impact strength by about 100%. UHMWPE3, however, did not show significant benefit over UHMWPE2: Its more homogeneous blend has even lower impact strength than the less homogenous one. In order to homogenize UHMWPE3 in H3490-LS-H, more compounding runs had to be implemented which led to degradation of the UHMWPE3. There is therefore an optimum Mv which maximises performance in terms of impact strength.

Further blend properties are reported in table 4.

**Table 4**

| Description | MFR5 g/10min | MFR21 g/10min | FRR 21/5 | PI | $\eta_{0.05rad/s}$ (Pa.s) | $\eta_{300rad/s}$ (Pa.s) | MWD | Density (kg/m$^3$) |
|---|---|---|---|---|---|---|---|---|
| HE3490-LS-H recipe | 0.27 | 10.18 | 37.7 | 3.3 | 148600 | 1084 | 23.5 | 960 |
| 10% UHMWPE1 (A) | 0.08 | 4.34 | 54.3 | 2.5 | 271100 | 1536 | 27.5 | 958 |
| 10% UHMWPE1 (B) | 0.1 | 4.36 | 43.6 | 2.9 | 260900 | 1385 | 24.9 | 958 |
| 10% UHMWPE2 (A) | <0.1 | 3.66 | N.A. | 3.1 | 341400 | 1510 | 32.0 | 957 |
| 10% UHMWPE2 (B) | 0.07 | 3.52 | 50.3 | 3.6 | 355500 | 1468 | 26.9 | 957 |
| 10% UHMWPE3 (A) | <0.1 | 3.86 | N.A. | 3.3 | 353000 | 1510 | 33.3 | 957 |
| 10% UHMWPE3 (B) | 0.07 | 3.38 | 48.3 | 4.9 | 294300 | 1396 | 25.3 | 957 |

The use therefore of the UHMWPE of the invention in the matrix HE3490-LS-H, in particular if homogenised completely, can boost the impact strength by about 100%.

**Claims**

1. A high density polyethylene blend, comprising

   (A) 55 to 95 wt% of a high density multimodal polyethylene copolymer component having a density of at least 940 kg/m$^3$ (ISO 1183), and
   (B) 5 to 45 wt% of an ultra-high molecular weight polyethylene homopolymer having a nominal viscosity molecular weight Mv of 2.100 kg/mol to 4,000,000 g/mol (UHMW polyethylene) different from component (A);

   and wherein said blend has an MFR$_{21}$ of 10.0 g/10min or less (ISO1133 at 190°C and 21.6 kg) and a density of at least 940 kg/m$^3$.

2. A blend as defined in any preceding claim. wherein component (A) is a copolymer having 0.1 to 2.0 mol% comonomer (FTIR).

3. A blend as defined in any preceding claim, wherein component (A) has an MFR$_{21}$, of 1-20 g/10min (ISO1133 at 190°C and 21.6 kg).

4. A blend as defined in any preceding claim, wherein component (A) comprises an ethylene homopolymer component and a butene or hexene ethylene copolymer component. such as 70 to 30 wt% of the ethylene homopolymer component and 30 to 70 wt% of the butene or hexene ethylene copolymer component.

5. A blend as defined in any preceding claim, wherein component (A) is present in an amount of 80 to 93 wt% and component (B) in an amount of 7 to 20 wt%.

6. A blend as claimed in any preceding claim wherein the blend has been extruded at least three times.

7. A blend as claimed in any preceding claim wherein component (B) has an Mv of 2,500 to 3.500 kg/mol.

8. A blend as claimed in any preceding claim wherein component (B) has an intrinsic viscosity of 10 dl/g or more.

9. A blend as claimed in any preceding claim wherein component (B) has a density of 925 to 945 kg/m$^3$ (ISO1183).

10. A blend as claimed in any preceding claim having an MFR$_{21}$ of 0.1 to 8 g/10min (ISO1133 at 190°C and 21.6 kg).

11. A blend as claimed in any preceding claim further comprising 0.5 to 5 wt% of carbon black.

12. A blend as claimed in any preceding claim having a notched impact strength nIS of at least 34 kJ/m$^2$ measured at 0°C (ISO 179:2000).

13. A blend as claimed in any preceding claim wherein component (A) has a Mw of 70.000 to less than 400.000 g/mol.

14. An article, preferably a pipe. comprising a polyethylene blend as defined in claim 1 to 12.

15. A process for the preparation of a blend as claimed in claim 1 to 12 comprising mixing

   (A) 55 to 95 wt% of a high density multimodal polyethylene copolymer component having a density of at least 940 kg/m$^3$. and
   (B) 5 to 45 wt% of an ultra-high molecular weight polyethylene homopolymer having a nominal viscosity molecular weight Mv of 2.100 kg/mol to 4,000,000 g/mol (UHMW polyethylene) different from component (A):

   and extruding, at least twice such as three times or more. the same so as to form a blend having an MFR$_{21}$ of 10.0 g/10min or less (ISO1133 at 190°C and 21.6 kg) and a density of at least 940 kg/m$^3$ (ISO1183).

16. A process as claimed in claim 15 wherein the blend components are extruded together twice.

## EP 2 931 806 B2

**Patentansprüche**

1. Mischung aus Polyethylen mit hoher Dichte, umfassend

   (A) 55 bis 95 Gew.-% von einer Komponente aus multimodalem Polyethylencopolymer mit hoher Dichte, die eine Dichte von mindestens 940 kg/m3 (ISO 1183) hat, und
   (B) 5 bis 45 Gew.-% von einem Polyethylenhomopolymer mit ultrahohem Molekulargewicht, das ein Nennviskositätsmolekulargewicht Mv von 2.100 kg/Mol bis 4,000,000 g/Mol hat (UHMW-Polyethylen) und sich von der Komponente (A) unterscheidet;

   und wobei die Mischung einen $MFR_{21}$ von 10,0 g/10 min oder weniger (ISO 1133 bei 190 °C und 21,6 kg) und eine Dichte von mindestens 940 kg/m3 hat.

2. Mischung nach einem der vorhergehenden Ansprüche, wobei die Komponente (A) ein Copolymer ist, das 0,1 bis 2,0 Mol-% Comonomer aufweist (FTIR).

3. Mischung nach einem der vorhergehenden Ansprüche, wobei die Komponente (A) einen $MFR_{21}$ von 1-20 g/10 min hat (ISO 1133 bei 190 °C und 21,6 kg).

4. Mischung nach einem der vorhergehenden Ansprüche, wobei die Komponente (A) eine Ethylenhomopolymerkomponente und eine Buten- oder Hexenethylencopolymerkomponente umfasst, wie zum Beispiel 70 bis 30 Gew.-% von der Ethylenhomopolymerkomponente und 30 bis 70 Gew.-% von der Buten- oder Hexenethylencopolymerkomponente.

5. Mischung nach einem der vorhergehenden Ansprüche, wobei die Komponente (A) mit einer Menge von 80 bis 93 Gew.-% und die Komponente (B) mit einer Menge von 7 bis 20 Gew.-% vorliegt.

6. Mischung nach einem der vorhergehenden Ansprüche, wobei die Mischung mindestens dreimal extrudiert wurde.

7. Mischung nach einem der vorhergehenden Ansprüche, wobei die Komponente (B) ein Mv von 2500 bis 3500 kg/Mol hat.

8. Mischung nach einem der vorhergehenden Ansprüche, wobei die Komponente (B) eine intrinsische Viskosität von 10 dl/g oder mehr hat.

9. Mischung nach einem der vorhergehenden Ansprüche, wobei die Komponente (B) eine Dichte von 925 bis 945 kg/m3 hat (ISO 1183).

10. Mischung nach einem der vorhergehenden Ansprüche, die einen $MFR_{21}$ von 0,1 bis 8 g/10 min hat (ISO 1133 bei 190 °C und 21,6 kg).

11. Mischung nach einem der vorhergehenden Ansprüche, die ferner 0,5 bis 5 Gew.-% Ruß umfasst.

12. Mischung nach einem der vorhergehenden Ansprüche, die eine Kerbschlagzähigkeit nIS (notched Impact Strength) von mindestens 34 kJ/m$^2$ aufweist, gemessen bei 0 °C (ISO 179:2000).

13. Mischung nach einem der vorhergehenden Ansprüche, wobei die Komponente (A) ein Mw von 70.000 bis weniger als 400.000 g/Mol hat.

14. Artikel, vorzugsweise ein Rohr, das eine Polyethylenmischung nach Anspruch 1 bis 12 umfasst.

15. Verfahren zur Herstellung einer Mischung nach Anspruch 1 bis 12, umfassend das Mischen von

    (A) 55 bis 95 Gew.-% von einer Komponente aus multimodalem Polyethylencopolymer mit hoher Dichte, die eine Dichte von mindestens 940 kg/m3 hat, und
    (B) 5 bis 45 Gew.-% von einem Polyethylenhomopolymer mit ultrahohem Molekulargewicht, das ein Nennviskositätsmolekulargewicht Mv von 2.100 kg/Mol bis 4,000,000 g/Mol hat (UHMW-Polyethylen) und sich von der Komponente (A) unterscheidet;

14

und das Extrudieren derselben, und zwar mindestens zweimal, wie zum Beispiel dreimal oder mehr, um eine Mischung zu bilden, die einen MFR$_{21}$ von 10,0 g/10 min oder weniger (ISO 1133 bei 190 °C und 21,6 kg) und eine Dichte von mindestens 940 kg/m3 (ISO 1183) hat.

**16.** Verfahren nach Anspruch 15, wobei die Mischungskomponenten zweimal zusammen extrudiert werden.

**Revendications**

**1.** Mélange de polyéthylènes haute densité, comprenant

(A) 55 à 95 % en poids d'un composant copolymère de polyéthylène multimodal haute densité ayant une masse volumique d'au moins 940 kg/m3 (ISO 1183), et
(B) 5 à 45 % en poids d'un homopolymère de polyéthylène de masse moléculaire ultra-élevée ayant une masse moléculaire nominale en viscosité Mv de 2 100 kg/mol à 4 000 000 g/mol (polyéthylène UHMW) différent du composant (A);

et dans lequel ledit mélange a un MFR$_{21}$ de 10,0 g/10 min ou moins (ISO1133 à 190 °C et 21,6 kg) et une masse volumique d'au moins 940 kg/m$^3$.

**2.** Mélange selon une quelconque revendication précédente, dans lequel le composant (A) est un copolymère ayant 0,1 à 2,0 % en moles de comonomère (FTIR).

**3.** Mélange selon une quelconque revendication précédente, dans lequel le composant (A) a un MFR$_{21}$ de 1 à 20 g/10 min (ISO1133 à 190 °C et 21,6 kg).

**4.** Mélange selon une quelconque revendication précédente, dans lequel le composant (A) comprend un composant homopolymère d'éthylène et un composant copolymère de butène ou d'hexène éthylène, tel que 70 à 30 % en poids du composant homopolymère d'éthylène et 30 à 70 % en poids du composant copolymère de butène ou d'hexène éthylène.

**5.** Mélange selon une quelconque revendication précédente, dans lequel le composant (A) est présent en une quantité de 80 à 93 % en poids et le composant (B) en une quantité de 7 à 20 % en poids.

**6.** Mélange selon une quelconque revendication précédente dans lequel le mélange a été extrudé au moins trois fois.

**7.** Mélange selon une quelconque revendication précédente dans lequel le composant (B) a une Mv de 2 500 à 3 500 kg/mol.

**8.** Mélange selon une quelconque revendication précédente dans lequel le composant (B) a une viscosité intrinsèque de 10 dl/g ou plus.

**9.** Mélange selon une quelconque revendication précédente dans lequel le composant (B) a une masse volumique de 925 à 945 kg/m3 (ISO1183).

**10.** Mélange selon une quelconque revendication précédente ayant un MFR$_{21}$ de 0,1 à 8 g/10 min (ISO1133 à 190 °C et 21,6 kg).

**11.** Mélange selon une quelconque revendication précédente comprenant en outre 0,5 à 5 % en poids de noir de carbone.

**12.** Mélange selon une quelconque revendication précédente ayant une résistance au choc à entaille nIS d'au moins 34 kJ/m$^2$ mesurée à 0 °C (ISO 179:2000).

**13.** Mélange selon une quelconque revendication précédente dans lequel le composant (A) a une Mw de 70 000 ou inférieure à 400 000 g/mol.

**14.** Article, de préférence un tuyau, comprenant un mélange de polyéthylènes selon les revendications 1 à 12.

**15.** Procédé de préparation d'un mélange selon les revendications 1 à 12 comprenant le mélange de

(A) 55 à 95 % en poids d'un composant copolymère de polyéthylène multimodal haute densité ayant une masse volumique d'au moins 940 kg/m$^3$, et
(B) 5 à 45 % en poids d'un homopolymère de polyéthylène de masse moléculaire ultra-élevée ayant une masse moléculaire nominale en viscosité Mv de 2 100 kg/mol à 4 000 000 g/mol (polyéthylène UHMW) différent du composant (A);

et l'extrusion, au moins deux fois comme trois fois ou plus, de celui-ci de façon à former un mélange ayant un MFR$_{21}$ de 10,0 g/10 min ou moins (ISO1133 à 190 °C et 21,6 kg) et une masse volumique d'au moins 940 kg/m3 (ISO 1183).

**16.** Procédé selon la revendication 15 dans lequel les composants du mélange sont extrudés ensemble deux fois.

10% UHMWPE1, (A)
WS rating: 8.8

10% UHMWPE1, (B)
WS rating: 4.4

10% UHMWPE2, (A)
WS rating: 10.8

10% UHMWPE2 (B)
WS rating: 2.9

10 % UHMWPE3, (A)
WS rating: 17.2

10% UHMWPE3, (B)
WS rating: 5.0

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007042216 A
- WO 9618677 A
- WO 2006092378 A
- WO 9428064 A
- EP 517868 A

### Non-patent literature cited in the description

- **OGUNNIYI et al.** *Journal of Applied Polymer Science,* 2005, vol. 97, 413-425
- **VADHAR et al.** *Journal of Applied Polymer Science,* 1986, vol. 32, 5575-5584
- **HUANG ; BROWN.** *Polymer,* 1992, vol. 33, 2989-2997
- Rheological characterization of polyethylene fractions. **HEINO, E.L. ; LEHTINEN, A. ; TANNER J. ; SEPPÄLÄ, J.** Theor. Appl. Rheol., Proc. Int. Congr. Rheol. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995
- Definition of terms relating to the non-ultimate mechanical properties of polymers. *Pure & Appl. Chem.,* 1998, vol. 70 (3), 701-754